# EUROPEAN PATENT SPECIFICATION

(11) **EP 2 307 684 B1**
(45) Date of publication and mention of the grant of the patent: **22.02.2012**
(21) Application number: 09757665.6
(22) Date of filing: 27.05.2009
(51) Int. Cl.: F02B 37/013, F02B 29/04, F16M 5/00, F02B 37/007

(54) **A BASE FOR A PISTON ENGINE**
BASIS FÜR EINEN KOLBENMOTOR
BASE POUR UN MOTEUR À PISTONS

(30) Priority: 03.06.2008 FI 20085538
(43) Date of publication of application: 13.04.2011
(73) Proprietor: Wärtsilä Finland Oy, 65380 Vaasa (FI)
(72) Inventor: WIDJESKOG, Klaus, FI-65739 Jungsund (FI); RAIKIO, Tero, FI-65230 Vaasa (FI)
(74) Representative: Nissinen, Jyrki Antero
(86) International application number: PCT/FI2009/050443
(87) International publication number: WO 2009/147287

(56) References cited:
- EP-A- 0 548 005
- CH-A- 241 269
- GB-A- 2 019 489
- JP-A- 9 158 745
- US-A1- 2002 056 444

## Description

The invention relates to a base for a piston engine in accordance with the preamble of claim 1, on which base the piston engine can be mounted.

In large turbocharged piston engines, which are utilised in power plants and as main and auxiliary engines in vessels, the charging is often performed in two stages, i.e. first in a low-pressure charger and then in a high-pressure charger. Charge air is cooled between the charging stages as well as after the high-pressure charger before leading it to engine cylinders. In a large engine, the turbochargers and charge air coolers are large in size and therefore it is difficult to adapt them in conjunction with the engine. It is particularly problematic in V-engines, in which both cylinder rows may have a low-pressure turbocharger, a high-pressure turbocharger and charge air coolers of their own. Since there is not much space on top of the engine, the turbochargers and air coolers usually rest on a bracket mounted onto the end of the engine block. In a large engine, the turbochargers and air coolers with their connecting channels are heavy, whereby there is a massive load resting on the bracket and the centre of mass is located far away from the engine block. This causes e.g. vibration, isolation, sound and sealing problems. In addition, the mounting surface area between the bracket and the engine block is often quite small, whereby no large masses are allowed to be placed on the bracket. Similar problems also occur in conjunction with piston engines, which are charged in one stage.

Document EP 0 548 005 A discloses an arrangement with a multi-cylinder reciprocating piston internal combustion engine having an exhaust manifold connected to the upper end of the cylinder and at least one turbocharger assembly comprising a gas turbine and a compressor. The gas turbine is connected on the inlet side to the exhaust manifold and on the outlet side to an exhaust pipe. The charge air coming from the compressor is directed through a charge air cooler and fed to the cylinders in the area of the bottom end of the cylinder. The turbocharger assembly is arranged separately from the reciprocating piston internal combustion engine next to this beneath the bottom end of the cylinder and supported together with the exhaust pipe on a foundation for the turbocharger assembly. The charge air cooler arranged beneath the turbocharger assembly may be accommodated in a space beneath the foundation.

An object of the present invention is to provide a solution, by which the above-described problems can be decreased.

The objects of the invention are achieved as disclosed in the appended claim According to the invention, a piston engine arrangement comprises a piston engine and a base, on which an engine block of the piston engine is mounted. The base comprises an air casing for pressurised charge air, in which air casing a charge air cooler is arranged, and which base is arranged to be attached to a concrete base in stationary plant applications and to a ship hull in ship applications. The engine is provided with a turbocharger, which is placed on a bracket mounted onto the engine block.

Considerable advantages are achieved by the present invention. Since the charge air cooler is adapted in the air casing integrated with the engine base, there is less weight resting on the bracket mounted onto the engine block and the centre of mass is relatively close to the engine block, whereby less vibration problems occur. Owing to this, the turbochargers and consequently, also the engine and the generator set possibly connected thereto, have enhanced operation.

In the following, the invention is explained in more detail, by way of example, with reference to the appended schematic drawings, of which
Figure 1 is a schematic view of a piston engine turbocharged in two stages;
Figure 2 shows a base, on which the piston engine according to Figure 1 can be mounted;
Figure 3 shows the base according to Figure 2 and a piston engine mounted thereon;
Figure 4 shows another base according to the invention, on which the piston engine according to Figure 1 can be mounted;
Figure 5 shows the base according to Figure 4 and a piston engine mounted thereon;
Figure 6 shows a third base according to the invention, on which the piston engine according to Figure 1 can be mounted.

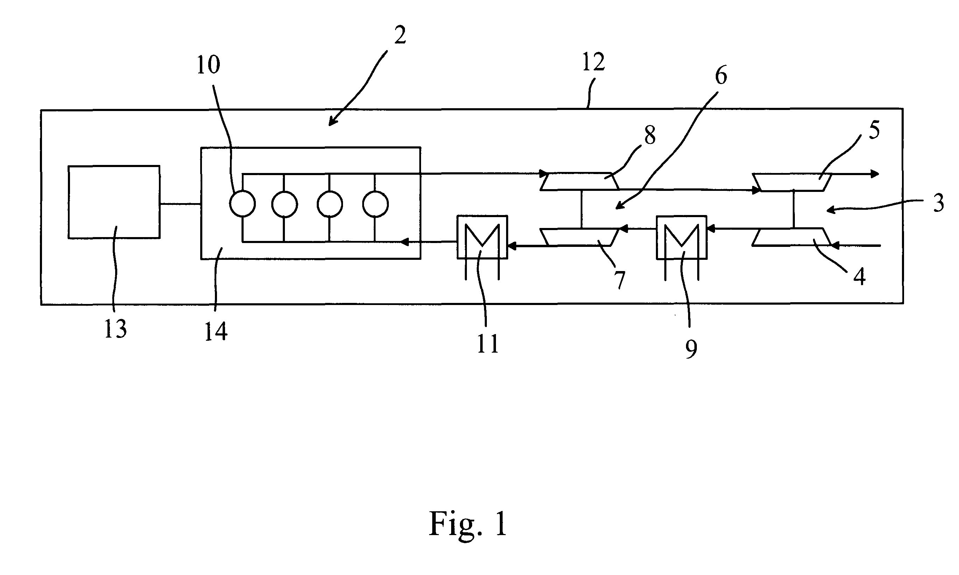

Figure 1 shows schematically a piston engine 2 turbocharged in two stages. The engine is a large piston engine, which is used for instance as a main and an auxiliary engine in ships as well as in power plants. The engine 2 comprises a low-pressure turbocharger 3, which is provided with a low-pressure compressor 4 and a low-pressure turbine 5. In addition, the engine 2 comprises a high-pressure turbocharger 6, which is provided with a high-pressure compressor 7 and a high-pressure turbine 8. The flow channel between the low-pressure compressor 4 and the high-pressure compressor 7 is provided with a low-pressure charge air cooler 9, by which the charge air pressurised by the low-pressure compressor 4 is cooled before it is led to the high-pressure compressor 7. The flow channel between the high-pressure compressor 7 and the engine cylinders 10 is provided with a high-pressure charge air cooler 11, by which the charge air pressurised by the high-pressure compressor 7 is cooled before it is led to cylinders 10. A generator set 13 is connected to the engine 2.

The engine 2, more specifically its engine block 14, is mounted on a base 12. If there is a generator set 13 connected to the engine 2, the generator set 13 as well is mounted on the base 12. The base 12 extends over the entire length of the engine 2. The base 12 may also act as an oil sump for the engine 2. The base 12 acts also as a mounting frame for the supports of the pipes leading to the engine 2 and away from the engine 2. In power plant or other stationary plant applications, the base 12 is attached to a concrete base, and in ship applications to the ship hull. Flexible dampers may be provided between the base 12 and the engine block 14 to prevent the transfer of engine vibration to the base 12. Dampers, for instance springs, may be provided between the base 12 and its mounting frame to suppress the vibration transfer to the mounting frame.

The base 12 comprises an air casing 15 for the pressurised charge air of the engine. The air casing 15 is integrated with the base 12. The air casing 15 comprises a low-pressure space 16 for low-pressure charge air and a high-pressure space 17 for high-pressure charge air. The cooler 9 for low-pressure charge air is arranged in the low-pressure space 16 and the cooler 11 for high-pressure charge air is arranged in the high-pressure space 17. The structure of the base 12 is explained in more detail in the embodiments described below.

While the engine 2 is running, air is led to the low-pressure compressor 4, by which its pressure is raised to about 4 bar. Next, low-pressure charge air is led to the low-pressure space 16, in which it is cooled by the low-pressure charge air cooler 9. Cooled charge air is led from the low-pressure space 16 to the high-pressure compressor 7, by which the pressure of the charge air is raised to about 8 bar. Next, high-pressure charge air is led to the high-pressure space 17 and it is cooled by the high-pressure charge air cooler 11. Cooled high-pressure charge air is led from the high-pressure space 17 to be used as combustion air in the cylinders 10. The charge air is cooled by the cooling water of the engine, which is supplied to the charge air coolers 9, 11. The exhaust gas from the cylinders 10 is conveyed to the high-pressure turbine 8 and subsequently, to the low-pressure turbine 5. The high-pressure turbine 8 drives the high-pressure compressor 7 and the low-pressure turbine 5 drives the low-pressure compressor 3.

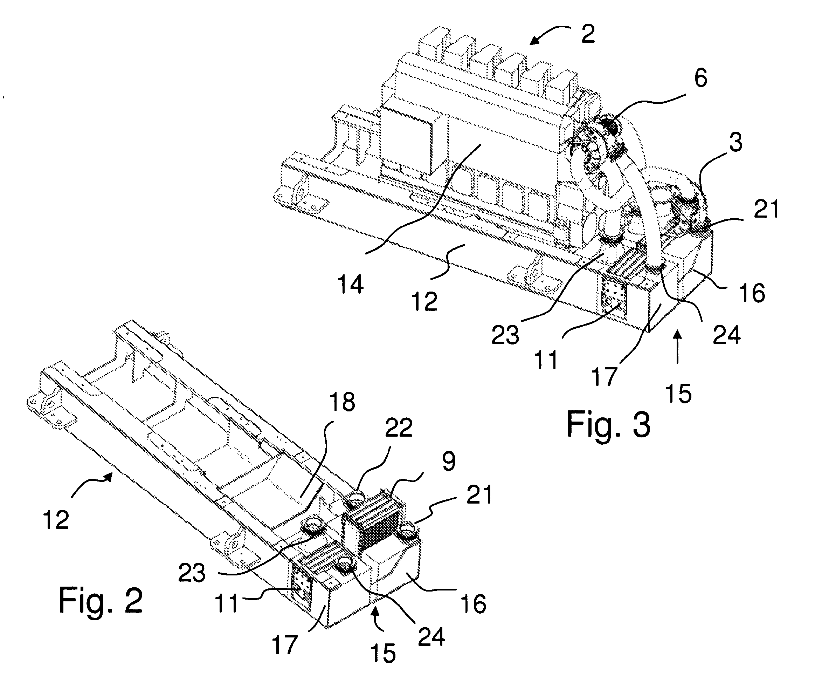

In the embodiment according to figures 2 and 3, an air casing 15 is arranged at one end of the base 12. The air casing 15 encloses a low-pressure space 16 for the charge air pressurised by a low-pressure compressor 5, and a high-pressure space 17 for the charge air pressurised by a high-pressure compressor 8. A high-pressure charge air cooler 11 is arranged in the high-pressure space 17. A low-pressure charge air cooler 9 is arranged in the low-pressure space 16. The cover of the air casing 15 is provided with an inlet 21 for conducting the charge air coming from the low-pressure compressor 4 to the low-pressure space 16 and with an outlet 22 for discharging cooled charge air from the low-pressure space 16. Further, the air casing 15 is provided with a second inlet 23 for conducting the charge air coming from the high-pressure compressor 7 to the high-pressure space 17. The air casing 15 is provided with a second outlet 24 for discharging cooled charge air from the high-pressure space 17. The inlet 21 is in flow connection with the outlet of the low-pressure compressor and the outlet 22 with the inlet of the high-pressure compressor. The second inlet 23 is in flow connection with the outlet of the high-pressure compressor 7 and the second outlet 24 with the charge air channel leading to the cylinders. A low-pressure turbocharger 3 is supported by the air casing 15. A high-pressure turbocharger 6 is adapted on a bracket mounted onto the engine block 14. The base 12 comprises an oil sump 18 for engine lubrication oil.

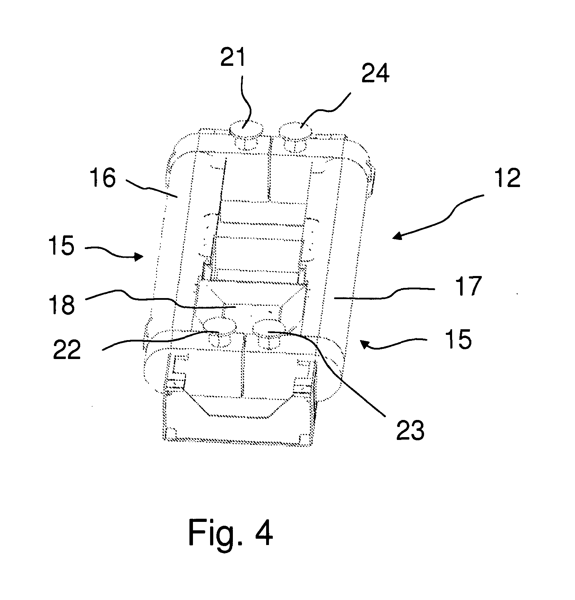

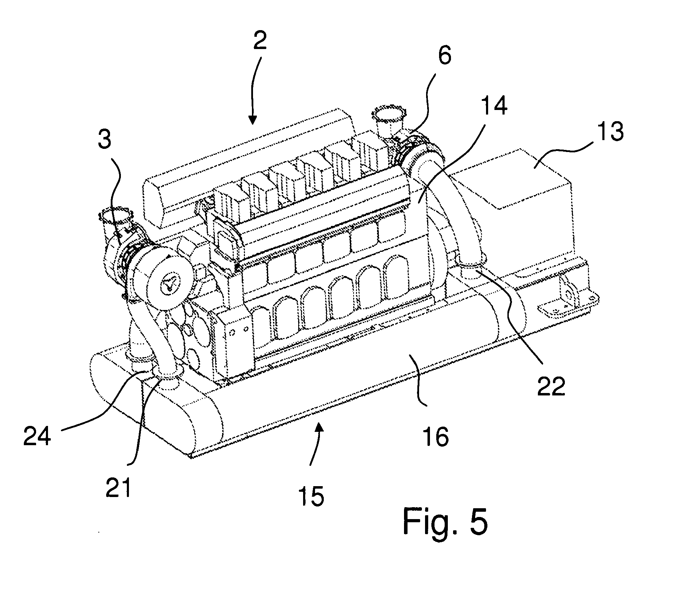

In the embodiment according to figures 4 and 5, the air casing 15 comprises an elongated low-pressure space 16 for the charge air pressurised by a low-pressure compressor 5 and an elongated high-pressure space 17 for the charge air pressurised by a high-pressure compressor 8. The low-pressure space 16 is arranged on one side of the base 12 and the high-pressure space 17 is arranged on the other side of the base 12. The part of the low-pressure space 12 located on one side of the base 16 is parallel with the part of the high-pressure space 17 located on the other side of the base. In addition, both ends of both the low-pressure space 16 and the high-pressure space 17 are provided with end sections parallel with the end of the base 12. The part of the low-pressure space 16 located on one side of the base 12 and the part of the high-pressure space 17 located on the other side of the base 12 are tubular. Both the low-pressure space 16 and the high-pressure space 17 extend over the entire length of the engine. An oil sump 18 for engine lubrication oil is provided between the low-pressure space 16 and the high-pressure space 17. A low-pressure charge air cooler 9 is arranged in the part of the low-pressure space 17 located on one side of the base 12. A high-pressure charge air cooler 11 is arranged in the part of the high-pressure space 17 located on the other side of the base 12. The high-pressure charge air cooler 11 and the low-pressure charge air cooler 9 are connected to the cooling liquid circuit of the engine 2.

The low-pressure turbocharger 3 and the high-pressure turbocharger 6 are arranged at opposite ends of the engine 2. The turbochargers 3, 6 are placed on brackets mounted onto the engine block 14. The low-pressure turbocharger 3 may also be supported to the base 12. The air casing 15 is provided with an inlet 21 for conducting the charge air coming from the low-pressure compressor 4 to the low-pressure space 16 and with an outlet 22 for discharging cooled charge air from the low-pressure space 16. The inlet 21 is in flow connection with the outlet of the low-pressure compressor 4 and the outlet 22 with the inlet of the high-pressure compressor 7. The inlet 21 and the outlet 22 are located at opposite ends of the low-pressure space 16, i.e. the inlet 21 at the end facing the low-pressure turbocharger 3 and the outlet 22 at the end facing the high-pressure turbocharger 6. Moreover, the air casing 15 is provided with a second inlet 23 for conducting the charge air coming from the high-pressure compressor 7 to the high-pressure space 17 and with a second outlet 24 for discharging cooled charge air from the high-pressure space 17. The second inlet 23 is in flow connection with the outlet of the high-pressure compressor 7 and the second outlet 24 with the charge air channel leading to the cylinders. The second inlet 23 and the second outlet 24 are located at opposite ends of the high-pressure space 17, i.e. the second inlet 23 at the end facing the high-pressure turbocharger 6 and the second outlet 24 at the end facing the low-pressure turbocharger 3.

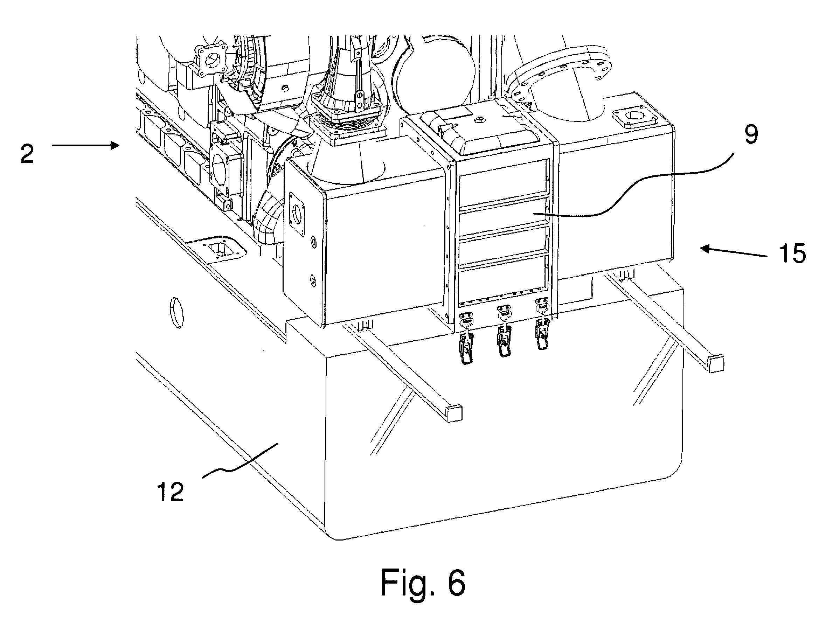

In the embodiment according to figure 6, an air casing 15 is adapted at the end of the base 12. The air casing 15 comprises a low-pressure space 16 for the charge air pressurised by a low-pressure compressor 4. The low-pressure charge air cooler 9 is modular. The cooler 9 is arranged removably in the air casing 15. The cooler 9 can be mounted in the air casing 15 and removed therefrom without opening the air casing 15.

The invention is not limited to the embodiments described in the above, but several variations are conceivable within the scope of the appended claims. The charging may be performed in one stage instead of two separate stages. In that case, there is a space for charge air at only one pressure level in the air casing.

In the embodiment according to Figures 4 and 5, the air casing may be arranged only on one side of the base. In that case, there is a space for charge air at only one pressure level and for the charge air cooler in the air casing. If the charging is performed in two stages, there might be a space for low-pressure charge air and for the charge air cooler in the air casing located on the side of the base. The cooler for high-pressure charge air is placed on a bracket mounted onto the engine block.

Also other engine functions may be integrated to the base 12. For instance, the valves of wastegate and/or bypass channels may be supported onto the base 12. The wastegate and/or bypass channels may be integrated to the base 12. Exhaust gas is led along the wastegate channel past only one turbine or both turbines 5, 8. Pressurised charge air is led along the bypass channel past the engine into an exhaust gas channel, to a location before either one of the turbines 5, 8. The inlet opening of the bypass channel is arranged, in the flow direction of the charge air, between the low-pressure compressor 4 and the high-pressure compressor 7 or in a location after the high-pressure compressor 7. The inlet opening of the bypass channel may be located before or after the charge air cooler 9, 11. Similarly, the outlet opening of the bypass channel is arranged, in the flow direction of the charge air, in a location before the high-pressure turbine 8 or between the high-pressure turbine 8 and the low-pressure turbine 5.

The water supply channels of an apparatus used for moistening the charge air may be integrated to the base 12. A drop separator for charge air may be integrated to the base 12. Also, the cooling water channels of the engine may be integrated to the base 12. An air waste gate channel may be integrated to the base 12. Pressurised charge air is led through the air waste gate channel to be used outside the cylinders.

## Claims

1. A piston engine arrangement comprising a piston engine (2) and a base (12), on which an engine block of the piston engine (2) is mounted, which base (12) comprises an air casing (15) for pressurised charge air, in which air casing (15) a charge air cooler (9, 11) is arranged, and which base (12) is arranged to be attached to a concrete base in stationary plant applications and to a ship hull in ship applications, **characterised in that** the engine (2) is provided with a turbocharger (3, 6), which is placed on a bracket mounted onto the engine block.

2. A piston engine arrangement according to claim 1, **characterised in that** the air casing (15) comprises a low-pressure space (16) for low-pressure charge air and a high-pressure space (17) for high-pressure charge air, which low-pressure space (16) is provided with a low-pressure charge air cooler (9) and which high-pressure space (17) is provided with a high-pressure charge air cooler (11).

3. A piston engine arrangement according to claim 1 or 2, **characterised in that** the air casing (15) is arranged at the end of the base (12).

4. A piston engine arrangement according anyone of the preceding claims, **characterised in that** the air casing (15) is arranged on one side of the base (12).

5. A piston engine arrangement according to claim 4, **characterised in that** the air casing (15) is arranged on both sides of the base (12).

6. A piston engine arrangement according to claim 5, **characterised in that** the air casing (15) on one side of the base (12) comprises a low-pressure space (16) for low-pressure charge air and a cooler (9) for low-pressure charge air and the air casing (15) on the other side of the base (12) comprises a high-pressure space (17) for high-pressure charge air and a cooler (11) for high-pressure charge air.

7. A piston engine arrangement according to claim 6, **characterised in that** an oil sump for engine lubrication oil is provided between the low-pressure space (16) and the high-pressure space (17).

8. A piston engine arrangement according anyone of the preceding claims, **characterised in that** the charge air cooler can be removed from its place and adapted in its place without opening the air casing (15).

9. A piston engine arrangement (1) according to claim 8, **characterised in that** a generator set (13) connected to the piston engine (2) is mounted on the base (12).

10. A piston engine arrangement according anyone of the preceding claims, **characterised in that** the piston engine (2) is provided with a low-pressure turbocharger (3) and a high-pressure turbocharger (6).

## Patentansprüche

1. Kolbenmotoranordnung, die einen Kolbenmotor (2) und eine Basis (12), auf welcher ein Motorblock des Kolbenmotors (2) montiert ist, umfasst, wobei die Basis (12) ein Luftgehäuse (15) für druckbeaufschlagte Ladeluft umfasst, wobei in dem Luftgehäuse (15) ein Ladeluftkühler (9, 11) angeordnet ist, und wobei die Basis (12) dafür eingerichtet ist, in Anwendungen in stationären Anlagen an einem Betonsockel und in Schiffsanwendungen an einem Schiffsrumpf befestigt zu werden, **dadurch gekennzeichnet, dass** der Motor (2) mit einem Turbolader (3, 6) versehen ist, welcher auf einer Konsole angeordnet ist, die an dem Motorblock angebracht ist.

2. Kolbenmotoranordnung nach Anspruch 1, **dadurch gekennzeichnet, dass** das Luftgehäuse (15) einen Niederdruckraum (16) für Niederdruck-Ladeluft und einen Hochdruckraum (17) für Hochdruck-Ladeluft umfasst, wobei der Niederdruckraum (16) mit einem Niederdruck-Ladeluftkühler (9) versehen ist und wobei der Hochdruckraum (17) mit einem Hochdruck-Ladeluftkühler (11) versehen ist.

3. Kolbenmotoranordnung nach Anspruch 1 oder 2, **dadurch gekennzeichnet, dass** das Luftgehäuse (15) am Ende der Basis (12) angeordnet ist.

4. Kolbenmotoranordnung nach einem der vorhergehenden Ansprüche, **dadurch gekennzeichnet, dass** das Luftgehäuse (15) auf einer Seite der Basis (12) angeordnet ist.

5. Kolbenmotoranordnung nach Anspruch 4, **dadurch gekennzeichnet, dass** das Luftgehäuse (15) auf beiden Seiten der Basis (12) angeordnet ist.

6. Kolbenmotoranordnung nach Anspruch 5, **dadurch gekennzeichnet, dass** das Luftgehäuse (15) auf einer Seite der Basis (12) einen Niederdruckraum (16) für Niederdruck-Ladeluft und einen Kühler (9) für Niederdruck-Ladeluft umfasst und das Luftgehäuse (15) auf der anderen Seite der Basis (12) einen Hochdruckraum (17) für Hochdruck-Ladeluft und einen Kühler (11) für Hochdruck-Ladeluft umfasst.

7. Kolbenmotoranordnung nach Anspruch 6, **dadurch gekennzeichnet, dass** eine Ölwanne für Motorschmieröl zwischen dem Niederdruckraum (16) und dem Hochdruckraum (17) vorgesehen ist.

8. Kolbenmotoranordnung nach einem der vorhergehenden Ansprüche, **dadurch gekennzeichnet, dass** der Ladeluftkühler von seinem Platz entfernt und an seinem Platz angepasst werden kann, ohne das Luftgehäuse (15) zu öffnen.

9. Kolbenmotoranordnung (1) nach Anspruch 8, **dadurch gekennzeichnet, dass** eine Generatoreinheit (13), die mit dem Kolbenmotor (2) verbunden ist, auf der Basis (12) montiert ist.

10. Kolbenmotoranordnung nach einem der vorhergehenden Ansprüche, **dadurch gekennzeichnet, dass** der Kolbenmotor (2) mit einem Niederdruck-Turbolader (3) und einem Hochdruck-Turbolader (6) versehen ist.

## Revendications

1. Dispositif de moteur à pistons comprenant un moteur à pistons (2) et une base (12), sur laquelle un bloc moteur du moteur à pistons (2) est monté, laquelle base (12) comprend un carter d'air (15) pour l'air de charge pressurisé, dans lequel carter d'air (15) est disposé un refroidisseur d'air de charge (9, 11) ; et laquelle base (12) est agencée pour être fixée à une base en béton dans des applications d'installation permanente et à une coque de navire dans des applications de navire, **caractérisé en ce que** le moteur (2) est pourvu d'un turbocompresseur (3, 6), qui est placé sur une console montée sur le bloc moteur.

2. Dispositif de moteur à pistons selon la revendication 1, **caractérisé en ce que** le carter d'air (15) comprend un espace à basse pression (16) pour l'air de charge à basse pression et un espace à haute pression (17) pour l'air de charge à haute pression, lequel espace à haute pression (16) est pourvu d'un refroidisseur d'air de charge à basse pression (9) et lequel espace à haute pression (17) est pourvu d'un refroidisseur d'air de charge à haute pression (11).

3. Dispositif de moteur à pistons selon la revendication 1 ou 2, **caractérisé en ce que** le carter d'air (15) est disposé à l'extrémité de la base (12).

4. Dispositif de moteur à pistons selon une quelconque des revendications précédentes, **caractérisé en ce que** le carter d'air (15) est disposé sur le côté de la base (12).

5. Dispositif de moteur à pistons selon la revendication 4, **caractérisé en ce que** le carter d'air (15) est disposé sur les deux côtés de la base (12).

6. Dispositif de moteur à pistons selon la revendication 5, **caractérisé en ce que** le carter d'air (15) sur un côté de la base (12) comprend un espace à basse pression (16) pour l'air de charge à basse pression et un refroidisseur (9) pour l'air de charge à basse pression et le carter d'air (15) sur l'autre côté de la base (12) comprend un espace à haute pression (17) pour l'air de charge à haute pression et un refroidisseur (11) pour l'air de charge à haute pression.

7. Dispositif de moteur à pistons selon la revendication 6, **caractérisé en ce que** un collecteur d'huile pour l'huile de lubrification du moteur est prévu entre l'espace à basse pression (16) et l'espace à haute pression (17).

8. Dispositif de moteur à pistons selon une quelconque des revendications précédentes, **caractérisé en ce que** le refroidisseur d'air de charge peut être retiré de son emplacement et adapté à son emplacement sans ouvrir le carter d'air (15).

9. Dispositif de moteur à pistons (1) selon la revendication 8, **caractérisé en ce que** un ensemble de générateur (13) raccordé au moteur à pistons (2) est monté sur la base (12).

10. Dispositif de moteur à pistons selon une quelconque des revendications précédentes, **caractérisé en ce que** le moteur à pistons (2) est pourvu d'un turbocompresseur à basse pression (3) et d'un turbocompresseur à haute pression (6).
